# EUROPÄISCHE PATENTSCHRIFT

(11) **EP 2 079 390 B1**
(45) Veröffentlichungstag und Bekanntmachung des Hinweises auf die Patenterteilung: **25.11.2009**
(21) Anmeldenummer: 07818050.2
(22) Anmeldetag: 05.09.2007
(51) Int. Cl.: A61C 7/04

(54) **ARBEITSZANGE FÜR DIE KIEFERORTHOPÄDIE UND DENTALTECHNIK**
WORK FORCEPS FOR ORTHODONTICS AND DENTISTRY
PINCE DE TRAVAIL POUR L'ORTHODONTIE ET LA DENTISTERIE

(30) Priorität: 17.10.2006 DE 102006049500
(43) Veröffentlichungstag der Anmeldung: 22.07.2009
(73) Patentinhaber: Filo-Tec Gmbh, 73655 Plüderhausen (DE)
(72) Erfinder: FISCHER-LOKOWANDT, Cornelia, 73655 Plüderhausen (DE)
(74) Vertreter: Müller, Gottfried
(86) Internationale Anmeldenummer: PCT/EP2007/007713
(87) Internationale Veröffentlichungsnummer: WO 2008/046472

(56) Entgegenhaltungen:
- WO-A-98/04206
- DE-C- 667 040
- DE-C1- 4 218 458
- US-A- 3 244 201
- US-A- 3 781 993

## Beschreibung

Die Erfindung bezieht sich auf eine Arbeitszange für die Kieferorthopädie und Dentaltechnik nach dem Oberbegriff des Anspruches 1.

In der DE 40 06 111 C1 wird eine Arbeitszange beschrieben, die zwei gelenkig gekoppelte Zangenhälften umfasst, welche jeweils auf gegenüberliegenden Seiten des Drehgelenks einen Griffschenkel und eine Arbeitsbacke aufweisen. An den Arbeitsbacken sind unterschiedliche Funktionselemente vorgesehen, unter anderem Erhebungen und Vertiefungen an gegenüberliegenden Funktionsflächen der beiden Arbeitsbacken, die bei einem Schließen der Zange ineinander greifen und einem zwischenliegenden, zu bearbeitenden Draht eine gewünschte Geometrie aufprägen. Hierdurch ist es möglich, Drähte, die in der Dentaltechnik und Kieferorthopädie eingesetzt werden, beispielsweise zum Herstellen von Zahnspangen, in gewünschter Weise zu biegen. Es sind insgesamt eine Mehrzahl unterschiedlicher Erhebungen und Vertiefungen mit verschiedenen Geometrien vorgesehen, um eine größere Anzahl unterschiedlicher Drahtgeometrien realisieren zu können.

Eine mit der DE 40 06 111 C1 vergleichbare Arbeitszange wird auch in der DE 42 18 458 C1 beschrieben.

Aus der US 3,727,316 A ist ebenfalls eine Arbeitszange zum Einsatz in der Kieferorthopädie und Dentaltechnik bekannt. An den Zangenhälften der Arbeitszange sind Funktionselemente vorgesehen, zu denen auch eine Schneidfläche gehört, die benachbart zum Drehgelenk der Zange angeordnet ist.

Aus anderen Bereichen der Technik sind so genannte Abisolierzangen bekannt, beispielsweise aus der US 4,337,542 A, die beidseitig des zentralen Drehgelenks an den einander zugewandten Seiten der Zangenhälften diverse Furiktionsabschnitte zur Drahtbearbeitung aufweisen.

Aus der US 3,244,201 A ist eine Arbeitszange bekannt, die zwei schwenkbar zueinander angeordnete Arbeitsbacken aufweist, wobei in einem Ausführungsbeispiel dieser Druckschrift ein zusätzlicher Funktionsast zwischen den Arbeitsbacken vorgesehen ist. Der Funktionsast ist über eine Verstelleinrichtung fest mit einer Arbeitsbacke verbunden, wobei der Abstand zur Arbeitsbacke über eine Stellschraube einstellbar ist. Über den Funktionsast kann somit der Abstand zwischen den zusammenwirkenden Arbeitsflächen an den Arbeitsbacken eingestellt werden.

Aus der US 3,781,993 A ist eine Arbeitszange zur Verwendung in der Kieferorthopädie bekannt, bestehend aus zwei Zangenhälften, die über ein Drehgelenk schwenkbar aneinander gekoppelt sind, wobei die Griffschenkel in dem dem Drehgelenk benachbarten Bereich einen Funktionsabschnitt miteinander zugewandten, zusammenwirkenden Schneidkanten aufweisen.

Von diesem Stand der Technik ausgehend liegt der Erfindung die Aufgabe zugrunde, eine Arbeitszange für den Einsatz in der Kieferorthopädie und Dentaltechnik mit zusätzlichen Funktionen ohne Einschränkung der Handhabbarkeit zu versehen.

Diese Aufgabe wird erfindungsgemäß mit den Merkmalen des Anspruches 1 gelöst. Die Unteransprüche geben zweckmäßige Weiterbildungen an.

Die erfindungsgemäße Arbeitszange ist nicht nur im Bereich ihrer Arbeitsbacken für die Bearbeitung von Werkstücken einsetzbar, sondern darüber hinaus auch an den Griffschenkeln in einem dem Drehgelenk benachbarten Funktionsabschnitt. Dieser Funktionsabschnitt weist an jedem Griffschenkel jeweils eine Schneidkante auf, wobei die beiden Schneidkanten beim Schließen der Arbeitszange zusammenwirken und in der Lage sind, beispielsweise einen zwischenliegenden Draht zu durchtrennen. Aufgrund der Verlagerung dieser Scherfunktion auf die den Griffschenkeln benachbarte Seite der Arbeitszange steht an den Arbeitsbacken eine größere Funktionsfläche zur Verfügung, die für die Realisierung unterschiedlicher Funktionen genutzt werden kann. Insgesamt kann dadurch die Anzahl diverser Funktionen an der Arbeitszange erhöht werden, ohne die Handhabbarkeit einzuschränken. Die Abscherung des Drahtes an den beiden Schneidkanten im Griffbereich der Arbeitszange stellt im Vergleich zu einer Abscherung an den Arbeitsbacken keine erschwerte Handhabung dar. Die Hebelverhältnisse sind vergleichbar, so dass keine größere Muskelkraft für den Schervorgang aufgewendet werden muss.

Gemäß einer vorteilhaften Ausführung sind die Schneidkanten jeweils an Absätzen angeordnet, welche sich auf der Innenseite der Griffschenkel befinden, also auf derjenigen Seite der Griffschenkel, die den zwischenliegenden Griffbewegungsraum begrenzen. Die Schneidkanten befinden sich an den einander zugewandten Seitenkanten dieser Absätze. Über die Form und Gestaltung dieser Absätze wird eine ergonomische Betätigung der Arbeitszange für die Durchführung des Abschervorganges erreicht, indem die Schneidkanten zueinander in einen optimalen Relativwinkel zueinander gesetzt werden und außerdem ein Kreuzen der Schneidkanten bei einem ergonomisch angenehmen Öffnungswinkel der Griffschenkel erreicht wird.

Zur Reduzierung der Verletzungsgefahr sind gemäß vorteilhafter Ausführung die Schneidkanten von einem Schneidkantenschutz überdeckt, der als Schutzbügel ausgebildet ist, welcher an mindestens einem Griffschenkel angeordnet ist. Bevorzugt sind zwei Schutzbügel vorgesehen, von denen jeweils einer an einem Griffschenkel gehalten ist und sich in Querrichtung quer zur Längsachse der Zange erstreckt, wobei sich die beiden Schutzbügel sowohl bei geschlossener und geöffneter Arbeitszange überlappen, um bei einem versehentlichen Abgleiten der Hand ein Hineinrutschen in den Schnittbereich zwischen den beiden Schneidkanten zu verhindern.

In bevorzugter Ausführung bietet die Arbeitszange eine Mehrzahl unterschiedlicher Funktionalitäten, welche - abgesehen von den Schneidkanten, die im Bereich der Griffschenkel angeordnet sind - sich an den Arbeitsbacken befinden. Zwischen den beiden Arbeitsbacken ist erfindungsgemäß ein zusätzlicher Funktionsast (Branche) angeordnet, der an das Drehgelenk der Arbeitszange angekoppelt ist und sich in dem Winkelbereich zwischen den beiden Arbeitsbacken befindet. Dieser Funktionsast liegt bei geöffneter Arbeitszange vorteilhaft auf Abstand zu mindestens einer Arbeitsbacke, zweckmäßig aber in gleichem Winkelabstand zu beiden Arbeitsbacken, wodurch zusätzliche Funktionsflächen an dem Funktionsast gegeben sind, die für die Bearbeitung eines Werkstückes genutzt werden können. In vorteilhafter Weiterbildung ist der Funktionsast in dem zwischenliegenden Bereich zwischen den beiden Arbeitsbacken nicht frei beweglich gelagert, sondern an die Öffnungs- und Schließbewegung der Arbeitsbacken gekoppelt, um einen zusätzlichen Freiheitsgrad zu vermeiden und bei geöffneten Arbeitsbacken einen definierten Winkelbereich zwischen jeweils einer Arbeitsbacke und der benachbarten, zugewandten Funktionsseite am Funktionsast freizugeben. Mithilfe des Funktionsastes können zwei winkelförmige Arbeitsbereiche zwischen jeweils einer Arbeitsbacke und der jeweils zugeordneten Funktionsseite am Funktionsast genutzt werden.

Gegebenenfalls sind mehrere Funktionsäste in dem Arbeitswinkelbereich zwischen den Arbeitsbacken angeordnet.

Zweckmäßig sind die einander zugewandten Seiten der Arbeitsbacken sowie die Funktionsseiten des Funktionsastes jeweils als Prägeflächen mit Erhebungen und/oder Vertiefungen ausgebildet, wobei die Erhebungen und Vertiefungen an einer Seite mit korrespondierenden Vertiefungen bzw. Erhebungen an der gegenüberliegenden Seite zusammenwirken. Diese Ausführung kann sowohl mit als auch ohne Funktionsast realisiert werden. Für den Fall, dass ein Funktionsast vorgesehen ist, vergrößert sich die gesamte Funktionsfläche, so dass zusätzliche Varianten bzw. Ausgestaltungen der Erhebungen und Vertiefungen angeordnet werden können. Dies erlaubt zusätzliche Verformungsmöglichkeiten beispielsweise für einen zu bearbeitenden Draht.

Die beiden Arbeitsbacken können einen unterschiedlichen Querschnitt aufweisen. Beispielsweise besitzt eine Arbeitsbacke einen dreieckförmigen Querschnitt, wodurch auch der zu bearbeitende Draht entsprechend dreieckförmig gebogen werden kann. Die zweite Arbeitsbacke verläuft dagegen zweckmäßig auf ihrer der Funktionsseite abgewandten Rückseite konisch spitz zulaufend mit teilkreisförmigem Querschnitt, so dass der Draht mit unterschiedlichen Radien gebogen werden kann.

Darüber hinaus kann es zweckmäßig sein, auf der Rückseite einer oder beider Arbeitsbacken eine oder mehrere Nuten einzubringen, in die der Draht zum Umbiegen eingelegt werden kann. Für den Fall, dass eine Mehrzahl derartiger Nuten vorgesehen sind, verlaufen diese zweckmäßig parallel zueinander und quer zur Längsrichtung der Zange und weisen insbesondere einen definierten Abstand zueinander auf, so dass die Nuten auch als Messeinrichtung verwendet werden können, um Abstände bzw. Längen an einem zu bearbeitenden Werkstück zu messen.

Die Prägemuster an den Funktionsflächen der Arbeitsbacken bzw. des Funktionsastes können in mannigfaltiger Weise ausgestaltet werden. So ist es beispielsweise möglich, dass sich ein derartiges Prägemuster im Wesentlichen in Achslängsrichtung der Arbeitszange erstreckt und sich aus einzelnen Abschnitten bzw. Segmenten zusammensetzt, die gegenüber der Längsrichtung nur verhältnismäßig geringe Winkelabweichungen aufweisen. In diese Vertiefungen kann der Draht der Länge nach eingelegt und durch Prägen mit einem korrespondierenden Prägestempel entsprechend verformt werden, wobei der Prägestempel als zugeordnete Erhebung an der gegenüberliegenden Funktionsfläche des Funktionsastes bzw. der gegenüberliegenden Arbeitsbacke ausgebildet ist.

Weitere Vorteile und zweckmäßige Ausführungen sind den weiteren Ansprüchen, der Figurenbeschreibung und den Zeichnungen zu entnehmen. Es zeigen:
- Fig. 1: in Draufsicht eine Arbeitszange für den Einsatz in der Kieferorthopädie und Dentaltechnik,
- Fig. 2: in vergrößerter Einzeldarstellung die Ansicht einer Rückseite einer Arbeitsbacke mit einer Mehrzahl parallel verlaufender Nuten, wobei in eine Nut ein zu bearbeitender Draht eingelegt ist,
- Fig. 3: in vergrößerter Darstellung die Ansicht auf die Funktionsfläche einer Arbeitsbacke mit einer erhabenen Prägestruktur,
- Fig.4: eine Fig. 3 entsprechende Darstellung der Funktionsfläche einer Arbeitsbacke in modifizierter Ausführung, bei der in die Erhebung eine Nut bzw. Vertiefung eingebracht ist, in die der Draht eingelegt werden kann.

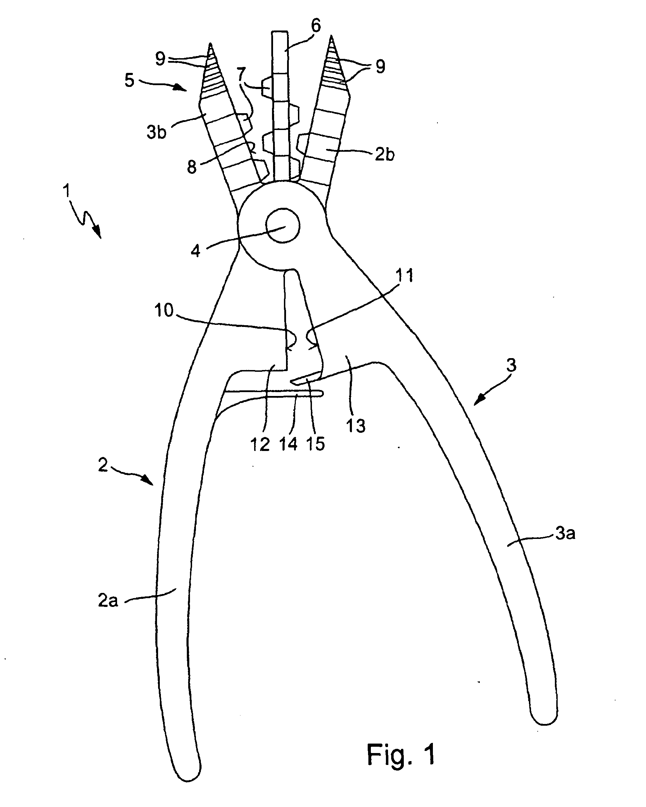

Die in Fig. 1 dargestellte Arbeitszange 1 wird zur Bearbeitung von Werkstücken, beispielsweise von Draht in der Kieferorthopädie und Dentaltechnik eingesetzt. Die Arbeitszange 1 besteht aus zwei Zangenhälften 2 und 3, die jeweils einen Griffschenkel 2a und 3a und eine Arbeitsbacke 2b bzw. 3b aufweisen, wobei Griffschenkel und Arbeitsbacke einer Zangenhälfte als einteiliges Bauteil ausgeführt sind. Die beiden Zangenhälften 2 und 3 sind über ein Drehgelenk 4 drehbar aneinander gekoppelt. Das Drehgelenk 4 separiert den Kopf 5 der Arbeitszange mit den Arbeitsbacken 2b und 3b von dem Griffbereich mit den Griffschenkeln 2a und 3a.

Zwischen den beiden Arbeitsbacken 2b und 3b ist ein Funktionsast 6 eingesetzt, der ebenfalls über das Drehgelenk 4 gehalten ist und sich vom Drehgelenk 4 ausgehend radial in den Arbeits- bzw. Winkelbereich zwischen den Arbeitsbacken erstreckt. Der Funktionsast 6 unterteilt den Arbeitsbereich zwischen den Arbeitsbacken 2b und 3b in zwei separate Arbeitsbereiche, wodurch zusätzliche Funktionalitäten realisiert werden können bzw. die zur Verfügung stehende Fläche zur Anbringung von Funktionselementen vergrößert werden kann. Die Innenseiten jeder Arbeitsbacke 2b bzw. 3b sind als Funktionsflächen mit darauf angeordneten Funktionsteilen ausgeführt, ebenso die Seitenflächen des Funktionsastes 6, die mit den jeweiligen Funktionsflächen an der Innenseite jeder Arbeitsbacke zusammenwirken. An den Funktionsflächen sind insbesondere Prägemuster vorgesehen, die aus Erhebungen 7 und zwischenliegenden Vertiefungen 8 bestehen. Die Prägemuster an einer Funktionsfläche, beispielsweise an der Innenseite der Arbeitsbacke 3b, wirken mit den Prägemustern an der zugewandten Funktionsfläche des Astes 6 zusammen. Beispielsweise können die Prägemuster an einander zugewandten Funktionsflächen komplementär zueinander ausgebildet sein. Die Funktionsflächen an den gegenüberliegenden Arbeitsbacken 2b bzw. 3b unterscheiden sich zweckmäßig voneinander, um eine Vielzahl unterschiedlicher Geometrien mit verschiedenartigen Prägemustern zu realisieren.

Der Funktionsast 6 in dem Arbeitsbereich zwischen den Arbeitsbacken 2b und 3b weist zweckmäßig keinen eigenen Freiheitsgrad auf, sondern ist an die Schwenkbewegung der Arbeitsbacken kinematisch gekoppelt, so dass bei einem Öffnen der Zange sich die Winkelbereiche zwischen jeweils einer Arbeitsbacke und dem Funktionsast in gleicher Weise öffnen. Beim Schließen der Arbeitszange werden diese Winkelbereiche gleichmäßig geschlossen, bis die einander zugewandten Funktionsflächen an den Innenseiten jeder Arbeitsbacke 2b bzw. 3b und dem Funktionsast flächig aneinander liegen.

Die beiden Arbeitsbacken 2b und 3b können einen unterschiedlichen Querschnitt aufweisen. Beispielsweise besitzt die Arbeitsbacke 2b einen dreieckförmigen Querschnitt, insbesondere in dem der Spitze benachbarten Bereich, wohingegen die Arbeitsbacke 3b - zweckmäßig ebenfalls benachbart zur Spitze - einen teilkreisförmigen Querschnitt aufweist, der von der Funktionsfläche begrenzt ist und sich zur Spitze hin konisch verjüngt. Den sich konisch verschlankenden Querschnitt können beide Arbeitsbacken aufweisen, wobei sich der konische Abschnitt zweckmäßigerweise nicht über die gesamte Länge jeder Arbeitsbacke erstreckt, sondern nur im äußeren, der Spitze zugewandten Abschnitt. In den sich konisch verjüngenden Abschnitt sind zweckmäßig mehrere parallel verlaufende Nuten eingebracht, die sich quer zur Zangenlängsachse erstrecken und insbesondere auf der Rückseite, also nicht auf der Funktionsfläche jeder Arbeitsbacke verlaufen. In diese Nuten kann ein zu bearbeitender Draht eingelegt und entsprechend der Geometrie der Nut umgebogen werden, so dass an der Arbeitsbacke mit dreieckförmigem Querschnitt eine entsprechend eckige Formgestaltung und an der Arbeitsbacke mit teilkreisförmigem Querschnitt eine entsprechend runde Formgestaltung des Drahtes möglich ist. Über die Wahl der Nut mit unterschiedlichem Abstand zur Spitze kann der Kreisradius bzw. der Abstand zwischen zwei Knicken im Draht beeinflusst werden. Die Nuten an einer Arbeitsbacke können außerdem als Messeinrichtung zur Abstandsmessung herangezogen werden.

Auf dem dem Kopf 5 der Arbeitszange gegenüberliegenden Bereich des Drehgelenkes 4, also im Bereich der beiden Griffschenkel 2a und 3a, befindet sich benachbart zu dem Drehgelenk 4 auf der Innenseite jedes Griffschenkels jeweils eine Schneidkante 10 bzw. 11. Jede Schneidkante 10 bzw. 11 bildet die Stirnkante eines Absatzes 12 bzw. 13, der einteilig mit dem Griffschenkel 2a bzw. 3b ausgebildet ist und sich in Richtung des Griffinnenraums, welcher von den beiden Griffschenkeln begrenzt ist, quer zur Zangenlängsachse erstreckt. Die beiden Schneidkanten 10 und 11 wirken zusammen; beim Öffnen der Arbeitszange wird ein winkelförmiger Schneidbereich zwischen den Schneidzangen 10 und 11 freigegeben, in den ein Draht oder dergleichen eingeführt werden kann, der bei einem Schließen der Zange von den Schneidkanten abgeschert wird.

Um eine Verletzungsgefahr auszuschließen, ist an jedem Griffschenkel 2a, 3a ein Schutzbügel 14 bzw. 15 angeordnet, wobei sich die beiden Schutzbügel in jeder Position der Arbeitszange 1, also auch im geöffneten Zustand der Arbeitszange überlappen, so dass der Schneidbereich zwischen den beiden Schneidkanten 10 und 11 immer gegenüber dem Griffbereich zwischen den beiden Griffschenkeln 2a und 3a separiert ist. Der eine Schutzbügel 14 ist unmittelbar an einem Griffschenkel 2a angeordnet und erstreckt sich etwa radial nach innen; dieser Schutzbügel 14 liegt mit geringem axialem Abstand zu dem Absatz 12. Der zweite Schutzbügel 15 ist gegenüber dem ersten Schutzbügel 14 kürzer ausgeführt, der zweite Schutzbügel 15 erstreckt sich ebenfalls radial nach innen, und zwar ausgehend von dem Absatz 13 am zweiten Griffschenkel 3a.

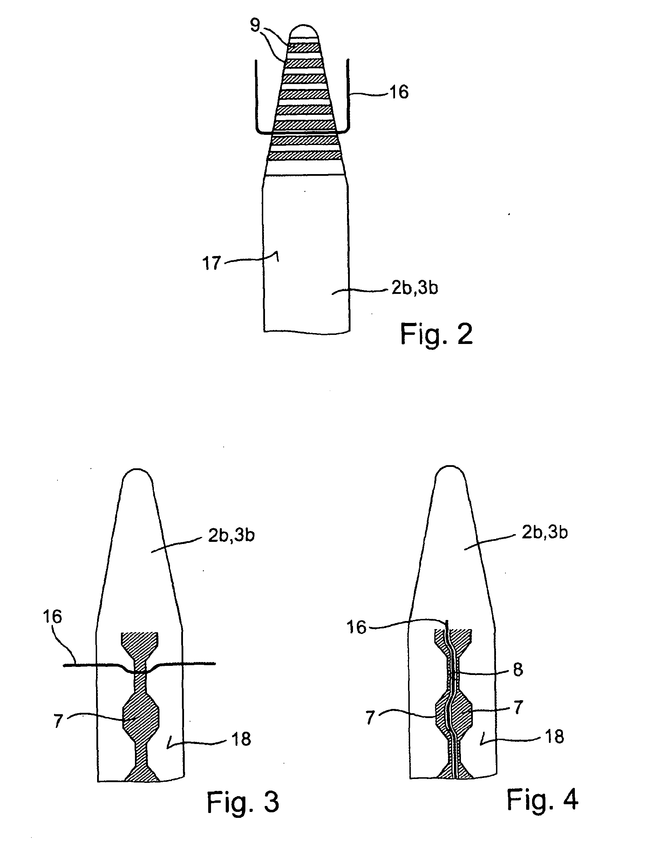

In Fig. 2 ist die Spitze einer Arbeitsbacke 2b, 3b im Detail dargestellt. Auf der Rückseite 17 der Arbeitsbacke befinden sich in dem konisch zulaufenden, der Spitze zugewandten Bereich mehrere, parallel zueinander verlaufende Nuten 9, in die ein Draht 16 eingelegt werden kann, der daraufhin umgebogen werden kann.

In Fig. 3 ist die Funktionsseite 18 einer Arbeitsbacke 2b bzw. 3b dargestellt. Die Funktionsseite 18 weist ein Prägemuster mit einer Erhebung 7 auf, die in Längsrichtung gesehen einen sich ändernden Querschnitt besitzt. Der zu bearbeitende Draht 16 kann in Querrichtung über die Erhebung 7 gelegt werden, bei einem Schließen der Zange wird der Draht von der komplementär geformten Funktionsfläche an der gegenüberliegenden Arbeitsbacke bzw. am Funktionsast der Querschnittsgestalt der Erhebung 7 entsprechend verformt.

Eine weitere Variante ist in Fig. 4 dargestellt, in der ebenfalls die Funktionsseite 18 einer Arbeitsbacke 2b bzw. 3b dargestellt ist. In die Erhebung 7, die sich etwa in Längsrichtung erstreckt, ist eine Vertiefung 8 eingebracht, die eine Nut mit mehreren, aneinander anschließenden Segmenten unterschiedlicher Winkellage bildet, wobei die einzelnen Segmente gegenüber der Längsachse jeweils einen kleinen Winkel einschließen können. In diese Nut 8 kann der Draht 16 eingesetzt werden, der bei einer Kraftbeaufschlagung durch eine komplementär geformte Erhebung an der zugeordneten, zweiten Funktionsfläche dem Verlauf der Nut 8 entsprechend verformt wird.

## Patentansprüche

1. Arbeitszange für die Kieferorthopädie und Dentaltechnik, mit zwei über ein Drehgelenk (4) gekoppelten Zangenhälften (2, 3), die auf gegenüberliegenden Seiten des Drehgelenks (4) jeweils einen Griffschenkel (2a, 3a) und eine Arbeitsbacke (2b, 3b) aufweisen, wobei die Griffschenkel (2a, 3a) in dem dem Drehgelenk (4) benachbarten Bereich einen Funktionsabschnitt mit einander zugewandten, zusammenwirkenden Schneidkanten (10, 11) aufweisen,
**dadurch gekennzeichnet,**
**dass** zwischen den beiden Arbeitsbacken (2b, 3b) ein Funktionsast (6) angeordnet ist, der bei geöffneter Arbeitszange (1) auf Abstand zu den Arbeitsbacken (2b, 3b) liegt, dass der Funktionsast (6) an das Drehgelenk (4) der Arbeitszange angekoppelt ist und sich in dem Winkelbereich zwischen den beiden Arbeitsbacken (2b, 3b) befindet, und dass in die den Arbeitsbacken (2b, 3b) zugewandten Seiten des Funktionsasts (6) jeweils eine Prägefläche mit Erhebungen (7) und/oder Vertiefungen (8) eingebracht ist, die mit der zugewandten Arbeitsbacke (2b, 3b) zusammenwirkt.

2. Arbeitszange nach Anspruch 1,
**dadurch gekennzeichnet,**
**dass** die Schneidkanten (10, 11) an Absätzen (12, 13) vorgesehen sind, die an den Griffschenkeln (2a, 3a) angeordnet sind und sich nach innen in Richtung des von beiden Griffschenkeln (2a, 3a) begrenzten Griffbewegungsraumes erstrecken.

3. Arbeitszange nach Anspruch 1 oder 2,
**dadurch gekennzeichnet,**
**dass** die Schneidkanten (10, 11) von einem Schneidkantenschutz überdeckt sind, der als Schutzbügel (14, 15) an mindestens einem Griffschenkel (2a, 3a) ausgebildet ist.

4. Arbeitszange nach Anspruch 3,
**dadurch gekennzeichnet,**
**dass** an jedem Griffschenkel (2a, 3a) ein Schutzbügel (14, 15) angeordnet ist, wobei sich die Schutzbügel (14, 15) bei geschlossener und bei geöffneter Arbeitszange (1) überlappen.

5. Arbeitszange nach einem der Ansprüche 1 bis 4,
**dadurch gekennzeichnet,**
**dass** der Funktionsast (6) mit den Zangenhälften (2, 3) kinematisch gekoppelt ist, dergestalt, dass beim Öffnen der Zangenhälften (2, 3) der Funktionsast (6) einen definierten Relativwinkel gegenüber den Arbeitsbacken (2b, 3b) einnimmt.

6. Arbeitszange nach einem der Ansprüche 1 bis 5,
**dadurch gekennzeichnet,**
**dass** eine Arbeitsbacke (2b bzw. 3b) konisch zulaufend ausgebildet ist.

7. Arbeitszange nach einem der Ansprüche 1 bis 6,
**dadurch gekennzeichnet,**
**dass** auf gegenüberliegenden Seiten des Funktionsasts (6) unterschiedliche Prägeflächen mit Erhebungen (7) und/oder Vertiefungen (8) eingebracht sind.

8. Arbeitszange nach einem der Ansprüche 1 bis 7,
**dadurch gekennzeichnet,**
**dass** eine Arbeitsbacke (2b bzw. 3b) einen dreieckförmigen Querschnitt aufweist.

9. Arbeitszange nach einem der Ansprüche 1 bis 8,
**dadurch gekennzeichnet,**
**dass** in die einander zugewandten Funktionsflächen der Arbeitsbacken (2b, 3b) Prägemuster mit Vertiefungen (8) und/oder Erhebungen (7) eingebracht sind.

10. Arbeitszange nach Anspruch 9,
**dadurch gekennzeichnet,**
**dass** ein sich im Wesentlichen in Achslängsrichtung erstreckendes Prägemuster in die Funktionsfläche einer Arbeitsbacke (2b bzw. 3b) eingebracht ist.

11. Arbeitszange nach Anspruch 9 oder 10,
**dadurch gekennzeichnet,**
**dass** ein sich im Wesentlichen quer zur Achslängsrichtung erstreckendes Prägemuster in die Funktionsfläche einer Arbeitsbacke (2b bzw. 3b) eingebracht ist.

12. Arbeitszange nach einem der Ansprüche 1 bis 11,
**dadurch gekennzeichnet,**
**dass** auf der der Funktionsfläche abgewandten Rückseite (17) mindestens einer Arbeitsbacke (2b bzw. 3b) mehrere Nuten (9) eingebracht sind.

## Claims

1. Work forceps for orthodontics and dentistry, with two forceps halves (2, 3) which are coupled via a pivot hinge (4) and which, on opposite sides of the pivot hinge (4), each have a grip arm (2a, 3a) and a work jaw (2b, 3b), and the grip arms (2a, 3a) have, in the area adjacent to the pivot hinge (4), a function section with mutually facing, interacting cutting edges (10, 11), **characterized in that** a function branch (6) is arranged between the two work jaws (2b, 3b) and, when the work forceps (1) are opened, lies at a distance from the work jaws (2b, 3b), **in that** the function branch (6) is coupled to the pivot hinge (4) of the work forceps and is located in the angle area between the two work jaws (2b, 3b), and **in that** an embossed surface with elevations (7) and/or depressions (8) is formed in each of the sides of the function branch (6) directed towards the work jaws (2b, 3b) and interacts with the work jaw (2b, 3b) facing it.

2. Work forceps according to Claim 1, **characterized in that** the cutting edges (10, 11) are provided on shoulders (12, 13), which are arranged on the grip arms (2a, 3a) and extend inwards in the direction of the gripping movement space delimited by the two grip arms (2a, 3a).

3. Work forceps according to Claim 1 or 2, **characterized in that** the cutting edges (10, 11) are covered by a cutting-edge guard, which is designed as a protective bow (14, 15) on at least one grip arm (2a, 3a).

4. Work forceps according to Claim 3, **characterized in that** a protective bow (14, 15) is arranged on each grip arm (2a, 3a), and the protective bows (14, 15) overlap each other when the work forceps (1) are closed and opened.

5. Work forceps according to one of Claims 1 to 4, **characterized in that** the function branch (6) is coupled kinematically to the forceps halves (2, 3) in such a way that, when the forceps halves (2, 3) are opened, the function branch (6) adopts a defined relative angle with respect to the work jaws (2b, 3b).

6. Work forceps according to one of Claims 1 to 5, **characterized in that** one work jaw (2b or 3b) tapers conically to a point.

7. Work forceps according to one of Claims 1 to 6, **characterized in that** different embossed surfaces with elevations (7) and/or depressions (8) are formed on opposite sides of the function branch (6).

8. Work forceps according to one of Claims 1 to 7, **characterized in that** one work jaw (2b or 3b) has a triangular cross section.

9. Work forceps according to one of Claims 1 to 8, **characterized in that** embossed patterns with depressions (8) and/or elevations (7) are formed in the mutually facing function surfaces of the work jaws (2b, 3b).

10. Work forceps according to Claim 9, **characterized in that** an embossed pattern extending substantially in the longitudinal axial direction is formed in the function surface of one work jaw (2b or 3b).

11. Work forceps according to Claim 9 or 10, **characterized in that** an embossed pattern extending substantially transverse to the longitudinal axial direction is formed in the function surface of one work jaw (2b or 3b).

12. Work forceps according to one of Claims 1 to 11, **characterized in that** several grooves (9) are formed on the rear face (17), directed away from the function surface, of at least one work jaw (2b or 3b).

## Revendications

1. Pince de travail pour l'orthodontie et la dentisterie, comprenant deux moitiés de pince (2, 3) accouplées au moyen d'une articulation pivotante (4), qui présente à chaque fois une branche de préhension (2a, 3a) et une mâchoire de travail (2b, 3b) sur des côtés opposés de l'articulation pivotante (4), les branches de préhension (2a, 3a) présentant, dans la région adjacente à l'articulation pivotante (4), une portion fonctionnelle avec des arêtes de coupe (10, 11) coopérant et tournées l'une vers l'autre,
**caractérisée en ce que**
l'on dispose entre les deux mâchoires de travail (2b, 3b) un axe fonctionnel (6) qui, lorsque la pince de travail (1) est ouverte, se situe à distance des mâchoires de travail (2b, 3b), **en ce que** l'axe fonctionnel (6) est accouplé à l'articulation pivotante (4) de la pince de travail et se trouve dans la plage angulaire entre les deux mâchoires de travail (2b, 3b), et **en ce qu'**à chaque fois une surface de marquage avec des rehaussements (7) et/ou des renfoncements (8) est réalisée dans les côté de l'axe fonctionnel (6) tournés vers les mâchoires de travail (2b, 3b), laquelle coopère avec la mâchoire de travail tournée vers elle (2b, 3b).

2. Pince de travail selon la revendication 1,
**caractérisée en ce que**
les arêtes de coupe (10, 11) sont prévues sur des épaulements (12, 13) qui sont disposés sur les branches de préhension (2a, 3a) et qui s'étendent vers l'intérieur dans la direction de l'espace de déplacement de préhension limité par les deux branches de préhension (2a, 3a).

3. Pince de travail selon la revendication 1 ou 2,
**caractérisée en ce que**
les arêtes de coupe (10, 11) sont recouvertes par une protection des arêtes de coupe qui est réalisée sous forme d'arceau de protection (14, 15) sur au moins une branche de préhension (2a, 3a).

4. Pince de travail selon la revendication 3,
**caractérisée en ce que**
l'on dispose sur chaque branche de préhension (2a, 3a) un arceau de protection (14, 15), les arceaux de protection (14, 15) se recouvrant lorsque la pince de travail (1) est fermée et ouverte.

5. Pince de travail selon l'une quelconque des revendications 1 à 4,
**caractérisée en ce que**
l'axe fonctionnel (6) est accouplé de manière cinématique aux moitiés de pince (2, 3), de telle sorte que lors de l'ouverture des moitiés de pince (2, 3), l'axe fonctionnel (6) adopte un angle relatif défini par rapport aux mâchoires de travail (2b, 3b).

6. Pince de travail selon l'une quelconque des revendications 1 à 5,
**caractérisée en ce**
**qu'**une mâchoire de travail (2b ou 3b) est réalisée de manière effilée coniquement.

7. Pince de travail selon l'une quelconque des revendications 1 à 6,
**caractérisée en ce que**
sur des côtés opposés de l'axe fonctionnel (6), sont réalisées différentes surfaces de marquage avec des rehaussements (7) et/ou des renfoncements (8).

8. Pince de travail selon l'une quelconque des revendications 1 à 7,
**caractérisée en ce**
**qu'**une mâchoire de travail (2b ou 3b) présente une section transversale triangulaire.

9. Pince de travail selon l'une quelconque des revendications 1 à 8,
**caractérisée en ce que**
dans les surfaces fonctionnelles tournées l'une vers l'autre des mâchoires de travail (2b, 3b) sont réalisés des motifs de marquage avec des renfoncements (8) et/ou des rehaussements (7).

10. Pince de travail selon la revendication 9,
**caractérisée en ce**
**qu'**un motif de marquage s'étendant essentiellement dans la direction longitudinale axiale est réalisé dans la surface fonctionnelle d'une mâchoire de travail (2b ou 3b).

11. Pince de travail selon la revendication 9 ou 10, **caractérisée en ce que** qu'un motif de marquage s'étendant essentiellement transversalement à la direction longitudinale axiale est réalisé dans la surface fonctionnelle d'une mâchoire de travail (2b ou 3b).

12. Pince de travail selon l'une quelconque des revendications 1 à 11,
**caractérisée en ce que**
sur le côté arrière (17), opposé à la surface fonctionnelle, d'au moins une mâchoire de travail (2b ou 3b), sont réalisées plusieurs rainures (9).
